# EUROPEAN PATENT APPLICATION

(11) **EP 2 634 507 A1**
(43) Date of publication of application: **04.09.2013**
(21) Application number: 13157451.9
(22) Date of filing: 01.03.2013
(51) Int. Cl.: F24J 2/52, H01L 31/042

(54) **Assembly of support structure and solar panel, and method for arranging a solar panel on a surface**

(30) Priority: 01.03.2012 NL 2008393
(71) Applicant: Stanstechniek Gaanderen Beheer B.V., 7011 EX Gaanderen (NL)
(72) Inventor: Van Loon, Jurgen Johannes Antonius, 7064 GH Silvolde (NL)
(74) Representative: van Oeffelt, Abraham

(57) **Abstract**

The invention relates to an assembly of a support structure and at least one solar panel coupled to the support structure, wherein the support structure comprises at least one base structure for placing on a substantially flat surface, in particular a roof. The invention also relates to a support structure for use in an assembly according to the invention. The invention further relates to a method for arranging a solar panel on a substantially flat surface, particularly by applying the assembly according to the invention.

## Description

The invention relates to an assembly of a support structure and at least one solar panel coupled to the support structure, wherein the support structure comprises at least one base structure for placing on a substantially flat surface, in particular a roof. The invention also relates to a support structure for use in an assembly according to the invention. The invention further relates to a method for arranging a solar panel on a substantially flat surface, particularly by applying the assembly according to the invention.

It is known to arrange solar panels on flat roofs of buildings in order to collect and convert solar energy to electricity. The solar panels are positioned here in a tilted orientation on a roof using a supporting frame, wherein a front side of the solar panels faces the sun so as to collect as much solar energy as possible. The supporting frame can be attached mechanically to the roof here, although it will generally be placed loosely on the roof. Because a rear side of the solar panel catches wind, relatively great forces may be exerted on the assembly of the frame and the solar panel, whereby the frame generally takes a weighted form and/or is provided with frame ballast to be able to prevent displacement of the assembly. A drawback of this necessary weighting is that relatively high pressures (of about 20 kg/m²) are exerted on the underlying roof, whereby the assembly can only be used on sufficiently strong roofs.

A first object of the invention is to provide a lighter assembly of a support structure and a solar panel for use on substantially flat surfaces such as flat roofs.

A second object of the invention is to provide a relatively inexpensive assembly of a support structure and a solar panel for use on substantially flat surfaces such as flat roofs.

A third object of the invention is to provide an improved assembly of a support structure and a solar panel for releasable use on substantially flat surfaces such as flat roofs.

At least one of the above stated objectives can be achieved by applying an assembly of the type stated in the preamble, wherein the support structure comprises at least one base structure for placing on a substantially flat surface, in particular a roof, and at least one top structure extending upward relative to the base structure and connected to the base structure, wherein the at least one solar panel is connected in freely pivotable manner at a first location to the top structure such that at a lower, second location lying at a distance from the first location the solar panel is configured to support loosely on the support structure and/or the substantially flat surface. By connecting the at least one solar panel in freely pivotable manner to the top structure and allowing it to support loosely (freely) at a lower position on the support structure and/or the substantially flat surface, the solar panel is oriented in the above stated advantageous diagonal orientation in order to collect as much solar energy as possible, but wherein the solar panel is further configured to pivot under the influence of wind forces, wherein the solar panel will no longer support on the support structure and wherein the solar panel will in fact be at least partially borne by the wind in longitudinal direction. The wind-catching surface of the solar panel will be considerably reduced here, whereby the load exerted by the wind on the assembly is also substantially reduced. The result hereof is that the mass of the support structure can also be considerably reduced, whereby the load on the substantially flat surface, usually a flat roof, is reduced, this being advantageous from a structural viewpoint. The pressure exerted by the assembly according to the invention on the surface lies here in the order of magnitude of 10 kg/m², which is half the pressure exerted on the surface by a conventional assembly. Because the assembly according to the invention can take a relatively light form without detracting from the operation of the assembly, less material will be required for manufacture of the assembly, whereby the assembly can be manufactured relatively inexpensively. A substantially flat surface is understood to mean a horizontal surface, as well as a surface sloping to some extent.

Although it is possible to envisage mounting a central part of the solar panel in freely pivotable manner on the top structure, it is generally more advantageous for at least one side, preferably at least one end surface, of the at least one solar panel to be connected in freely pivotable manner to the top structure. Such a lateral mounting on the one hand forces the solar panel at rest to support on the support structure and/or the surface, whereby a desired diagonal orientation of the solar panel is guaranteed as far as possible, and the solar panel can on the other hand be better attached and pivot in more controlled manner under the influence of wind forces.

At rest (normal position) the solar panel can support on the surface, in particular the roof, although it is usually more advantageous to allow the solar panel to support loosely on the support structure. Allowing the solar panel to support loosely on or lie against the support structure enables supporting to take place in relatively controlled manner, whereby the generally vulnerable solar panel can be protected as well as possible. It is possible here to envisage the solar panel supporting on the top structure, although it is also possible to envisage the at least one solar panel being configured to support loosely on the base structure. In order to limit as far as possible the bumping of the second location of the solar panel against the support structure or the surface, it is advantageous for the particular purpose of protecting the solar panel as well as possible that an underside of the solar panel is provided at the second location with at least one damping element. The damping element can for instance be manufactured here from (foam) rubber. It is also possible to envisage an upper side of the support structure being provided at the position of the loose support of the solar panel with at least one (other) damping element. In an alternative embodiment it is possible to envisage the at least one hinge via which the solar panel is connected to the top structure being provided with urging means for providing a counterpressure during pivoting of (the second location of) the solar panel in the direction of the support structure, whereby the descent speed of the solar panel is reduced. An example of applicable urging means is for instance a mechanical spring.

In order to prevent resonances or permanent vibrations and/or to prevent the panel landing at high speed on the surface and/or the damping element, the rotation of the element can also be limited, for instance by having the urging means comprise a damping element such as a gas or oil damper.

The urging means can more particularly be configured to exert a force dependent on wind force, this force being particularly correlated to the wind force. Such a force can be obtained in relatively simple manner by tensioning a sail, to which a transmission is attached.

In order to make the forces on such a sail controllable, the sail can be provided with at least one perforation, and particularly with a pattern of perforations extending over the sail.

The urging means can also be configured to provide a counterpressure or friction depending on the pivoting direction, which can for instance be realized in that the urging means comprise a probe arranged along an asymmetrical toothing.

The hinge can here form part of the top structure and/or the solar panel. It is also possible to envisage a first part of the hinge forming part of the top structure and a second part of the hinge forming part of the solar panel.

At rest the solar panel will generally enclose an angle with the horizontal of between 0 and 45 degrees, particularly between 20 and 25 degrees. The solar panel will generally be positioned here substantially wholly below the pivot axis of the solar panel. When sufficient wind force is exerted on the rear side of the solar panel, the solar panel will pivot about the pivot axis to a less diagonal position. It is possible here to envisage the solar panel being blown, when there is sufficient wind, into a substantially horizontal position or even to a position above a horizontal plane in which the pivot axis lies. In order to prevent excessive pivoting, and possible damage thereby to the solar panel, it may be advantageous to bound the maximum upward, and optionally downward, pivoting. The solar panel is preferably bounded in an extreme, upper pivoting position at which the solar panel encloses an angle with the (underlying) horizontal of between 0 and 10 degrees.

The at least one solar panel will generally be provided with a support frame for coaction with the support structure. The support frame, usually a peripheral frame, gives the solar panel strength and will generally also be used for pivotal mounting of the solar panel on the support structure.

It is possible to envisage pivotally connecting a plurality of solar panels simultaneously to the support structure. The different solar panels can be connected here to one collective top structure or to different top structures of the (same) support structure. The solar panels can be positioned here adjacently of each other (serial orientation) and/or one behind the other (parallel orientation). When the solar panels are positioned adjacently of each other, it can then be advantageous for the plurality of solar panels to be mutually connected so that they can better withstand gusts of wind.

The support structure can be of modular construction, wherein the at least one top structure is connected to the base structure. The mutual connection can be realized by means of fastening elements, although it is also possible to envisage realizing the connection by means of clamping and/or sliding the top structure relative to the base structure. It is usually advantageous here when one or more pin-hole connections are applied. It is further possible to envisage both the top structure and the base structure being constructed from a plurality of components. It is also possible to envisage manufacturing the support structure in one integral whole, wherein the base structure and the top structure transpose seamlessly into each other. The support structure, particularly the top structure, is optionally provided with at least one cable channel for guiding an electricity cable connected to a solar panel.

The at least one solar panel of the assembly preferably has a limited size so that the solar panel does not have too heavy a form. A typical width of the at least one solar panel lies here between 1 and 2 metres, and a typical length of the at least one solar panel lies between 0.5 and 1.5 metres.

The invention also relates to a support structure for use in an assembly according to the invention. Advantages and embodiment variants of the support structure have already been described at length in the foregoing.

The invention further relates to a method for arranging at least one solar panel on a substantially flat surface such as a flat roof, particularly by making use of an assembly according to the invention, comprising of: A) mounting a first location of the at least one solar panel on a support structure such that the at least one solar panel is connected in freely pivotable manner to the support structure, and B) arranging the support structure on the substantially flat surface, wherein a second location of the at least one solar panel supports loosely on the support structure and/or the substantially flat surface. It is possible here to envisage performing step B) prior to step A). At rest the solar panel will generally be oriented substantially diagonally here, wherein the support structure is positioned during step B) such that a front side of the solar panel is oriented in the direction of the sun. In the Northern hemisphere the front side of the solar panel will for this purpose face south and in the Southern hemisphere the front side of the solar panel will face north.

The invention will be elucidated on the basis of non-limitative exemplary embodiments shown in the following figures. Herein:
figure 1a is a side view of part of an assembly according to the invention in rest position,
figure 1b is a side view of the assembly according to figure 1a in active position,
figure 1c is a perspective view of the assembly according to figure 1a,
figure 1d is a perspective view of the assembly according to figure 1b,
figure 2a is a perspective view of a hinge in an extreme position as used in the assembly according to figures 1a-1d,
figure 2b is a perspective view of the hinge according to figure 2a in an intermediate position,
figure 3a is a side view of another assembly according to the invention in rest position,
figure 3b is a perspective view of the assembly according to figure 3a,
figure 4 is a perspective view of yet another assembly according to the invention in rest position, and
figure 5 is a perspective detail view of a bounding element for use in an assembly according to the invention;
figures 6a, 6b show an embodiment provided with urging means for the purpose of providing a counterpressure; and
figures 7a, 7b show an embodiment wherein the urging means are configured to provide a counterpressure or friction depending on the pivoting direction.

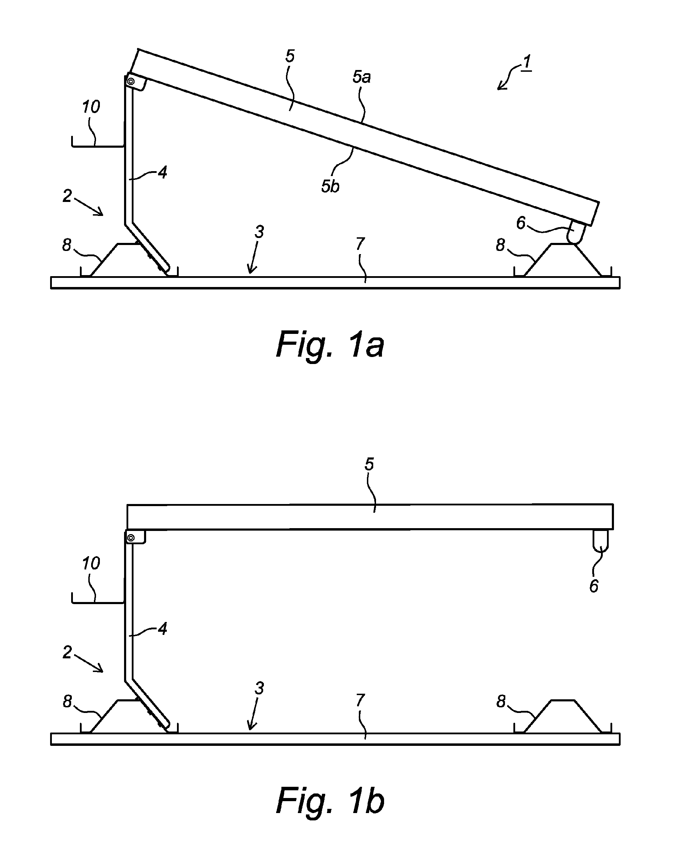

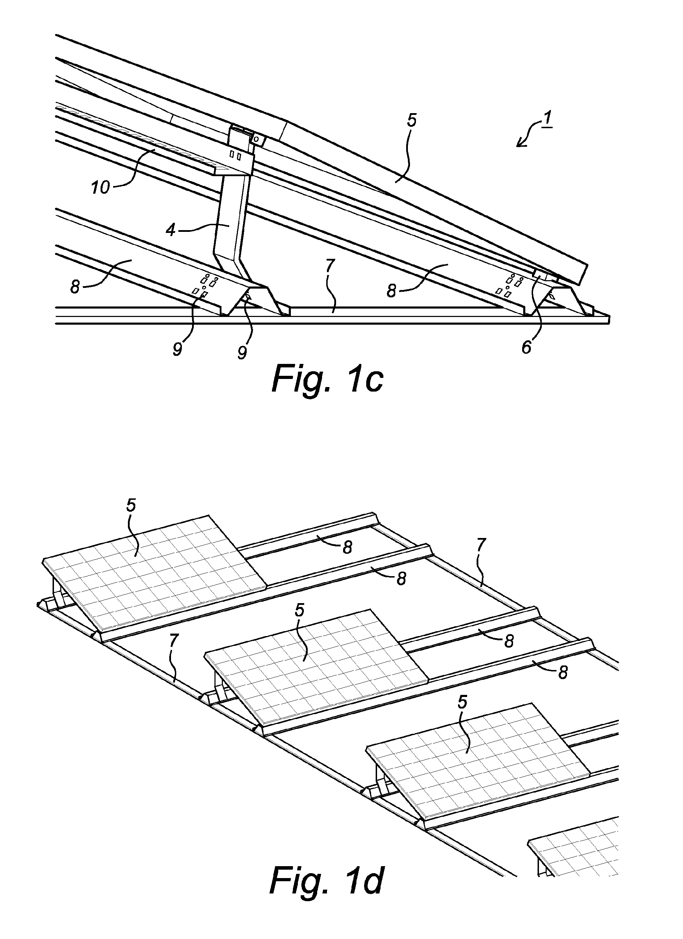

Figure 1a is a side view of a part of an assembly 1 according to the invention in rest position. Assembly 1 comprises a support structure 2 which is constructed particularly from a base structure 3 and a plurality of top structures 4 (one shown here) connected to base structure 3. Assembly 1 further comprises a plurality of solar panels 5 (one shown here), wherein each solar panel 5 is mounted on one side on a top structure 4 at a first location for free pivoting about pivot axis A and on an opposite side supports loosely on base structure 3 at a lower second location. An upper side 5a (front side) of each solar panel 5 is configured to convert solar energy to electrical energy, and is oriented diagonally so as to collect as much solar energy as possible. Assembly 1 is configured to be positioned loosely on a substantially flat surface such as a substantially flat roof. Wind catching the front side of solar panels 5 will exert a downward pressure on solar panels 5, whereby solar panels 5 will be consolidated in the rest position shown in figure 1a. When however the wind catches on a rear side 5b of solar panels 5, the wind, if sufficiently strong, will lift solar panels 5, whereby solar panels 5 will pivot around pivot axis A, whereby solar panels 5 will no longer support on base structure 3 (see for instance figure 1b) until the wind dies down and solar panels will pivot back to the rest position as according to figure 1a. In order to limit the intensity of the collision between each solar panel 5 and base structure 3, an underside of each solar panel 5 is provided with a rubber damping strip 6. This free pivoting of solar panels 5 can considerably reduce the load exerted by the wind on assembly 1, whereby assembly 1 as such can take a relatively lightweight and therefore inexpensive form. A limited mass of assembly 1 moreover increases the possible applications of assembly 1. Base structure 3 is of modular construction with longitudinal strips 7 to which bridge-like transverse strips 8 are fixed. As for instance shown in figure 1c, the bridge-like transverse strips 8 are provided with openings 9 for attaching top structures 4 to transverse strips 8 via pin-hole connections. Each top structure 4 is provided with a cable channel 10 for guiding cabling connected to solar panels 5. Figure 1d shows that the assembly comprises a plurality of solar panels 5 arranged parallel to each other.

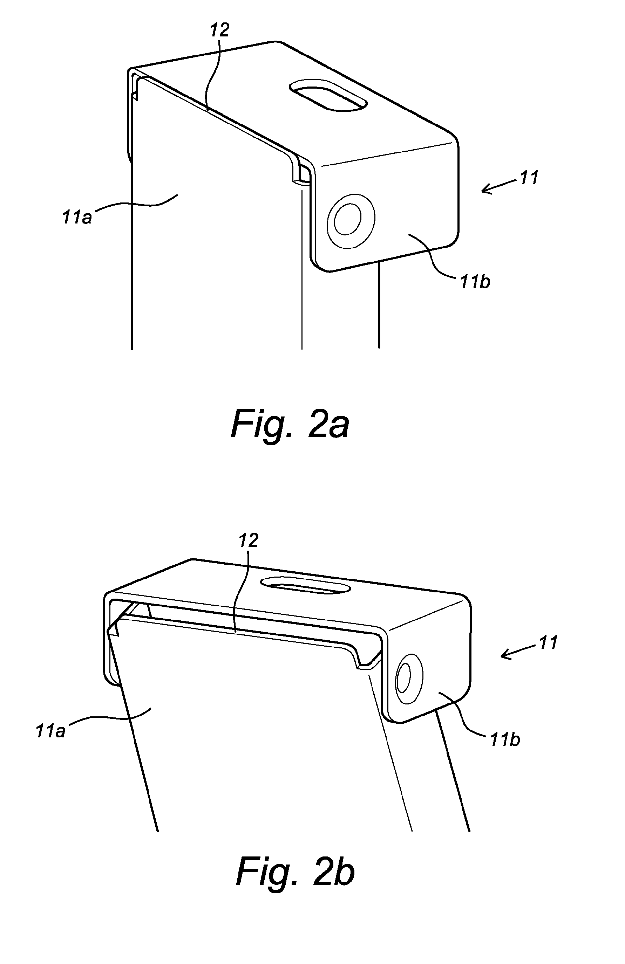

Figure 2a is a perspective view of a hinge 11 in an extreme position as used in the assembly according to figures 1a-1d. Hinge 11 comprises two hinge parts 11a, 11b connected pivotally to each other, wherein a first hinge part 11a forms an integral part of top structure 4 and a second hinge part 11b forms part of solar panel 5. As shown, the first hinge part 11a comprises a stop edge 12 whereby further pivoting of the second hinge part 11b, and thereby of solar panel 5, in upward direction is prevented and only pivoting in downward direction is possible (see figure 2b).

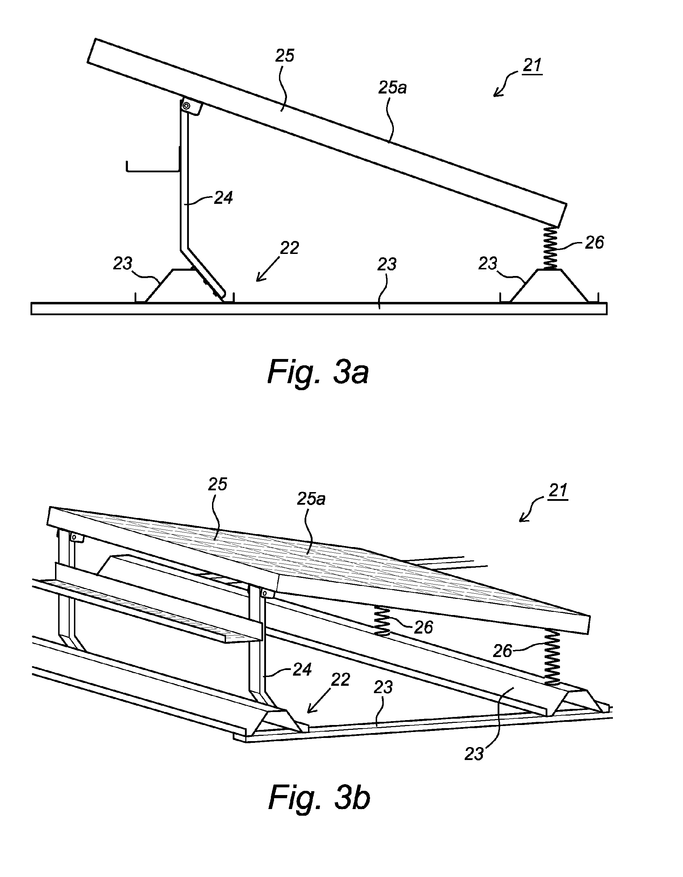

Figure 3a is a side view of another assembly 21 according to the invention in rest position. Assembly 21 comprises a support structure 22 which is constructed particularly from a base structure 23 and a top structure 24 connected to base structure 23. Assembly 21 further comprises a solar panel 25 which is pivotally connected to top structure 24 and on an opposite side supports loosely on base structure 23. An upper side 25a (front side) of each solar panel 25 is configured to convert solar energy to electrical energy, and is oriented diagonally so as to collect as much solar energy as possible. Assembly 21 is configured to be positioned loosely on a substantially flat surface such as a substantially flat roof. When the wind catches on a rear side of solar panel 25, the wind, if sufficiently strong, will lift solar panel 25, whereby the solar panel will pivot in upward direction and whereby solar panel 25 no longer supports on base structure 23 until the wind dies down and solar panels will pivot back to the rest position. In order to limit the intensity of the collision between solar panel 25 and base structure 23 during pivoting back, an underside of each solar panel 25 is provided with several rubber spiral springs 26.

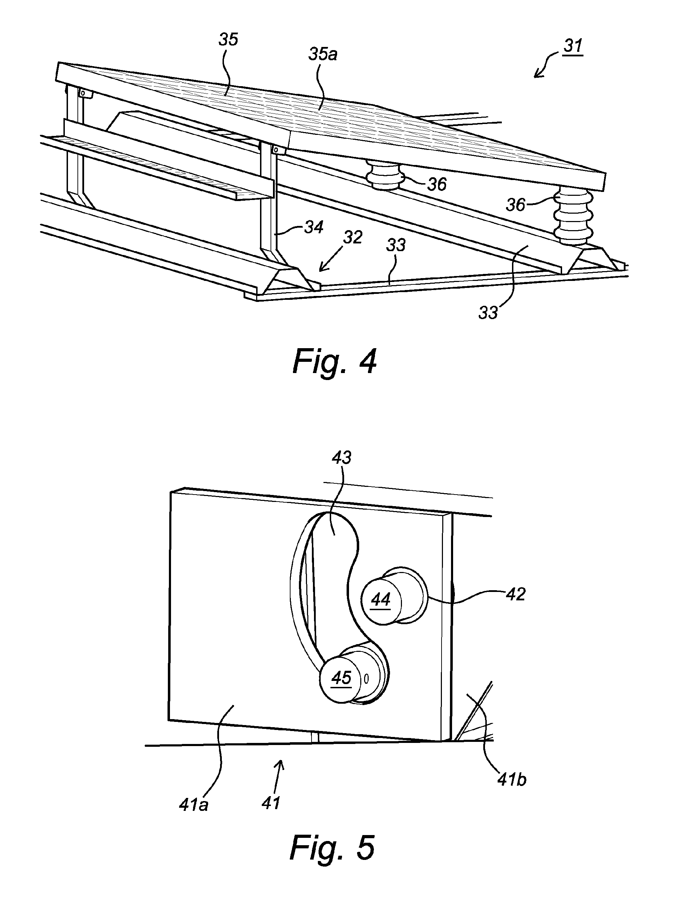

Figure 4 is a perspective view of yet another assembly 31 according to the invention in rest position. Assembly 31 comprises a support structure 32 constructed particularly from a base structure 33 and a top structure 34 connected to base structure 33. Assembly 31 further comprises a solar panel 35 which is pivotally connected to top structure 34 and on an opposite side supports loosely on base structure 33. An upper side 35a (front side) of each solar panel 35 is configured to convert solar energy to electrical energy, and is oriented diagonally so as to collect as much solar energy as possible. Assembly 31 is configured to be positioned loosely on a substantially flat surface such as a substantially flat roof, although it can also be attached mechanically to the relevant surface. When the wind catches on a rear side of solar panel 35, the wind, if sufficiently strong, will lift solar panel 35, whereby the solar panel will pivot in upward direction and whereby solar panel 35 no longer supports on base structure 33 until the wind dies down and solar panels will pivot back to the rest position. In order to limit the intensity of the collision between solar panel 35 and base structure 33 during pivoting back, an underside of each solar panel 35 is provided with several rubber shock absorbers or bumpers 36.

Figure 5 is a perspective detail view of a bounded hinge 41 for use in an assembly according to the invention. Hinge 41 is particularly configured to bound the maximum pivoting of a solar panel relative to a bearing support structure. Hinge 41 comprises for this purpose two hinge parts 41a, 41b pivotally connected to each other, wherein a first hinge part 41a forms an integral part of the support structure and a second hinge part 41b forms part of the solar panel. As shown, the first hinge part 41a comprises at least one circular recess 42 and at least one curved slot-like recess 43. The second hinge part 41b comprises at least one first pin 44 which protrudes through circular recess 42. The second hinge part 41b further comprises at least one second pin 45 configured to be received in the slot-like recess for the purpose of bounding the maximum pivoting - in upward and downward direction - of hinge 41.

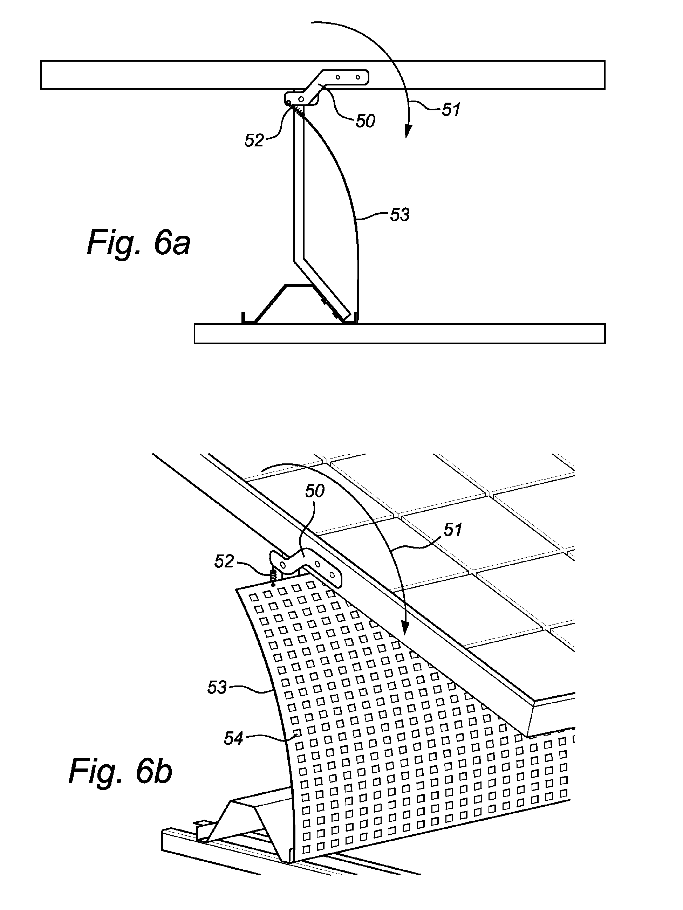

Figures 6a, 6b show an embodiment wherein at least one hinge, via which the solar panel is connected to the top structure, is provided with urging means 50 for providing a counterpressure when (the second location of) the solar panel is pivoted in the direction 51 of the support structure, whereby the descent speed of the solar panel is reduced, formed by a mechanical spring 52. The urging means are more particularly configured to exert a force dependent on wind force. Such a force is obtained by a tensioned sail 53 to which a transmission is attached. In order to make the forces on the sail controllable, the sail is provided with a pattern of perforations 54 extending over the sail.

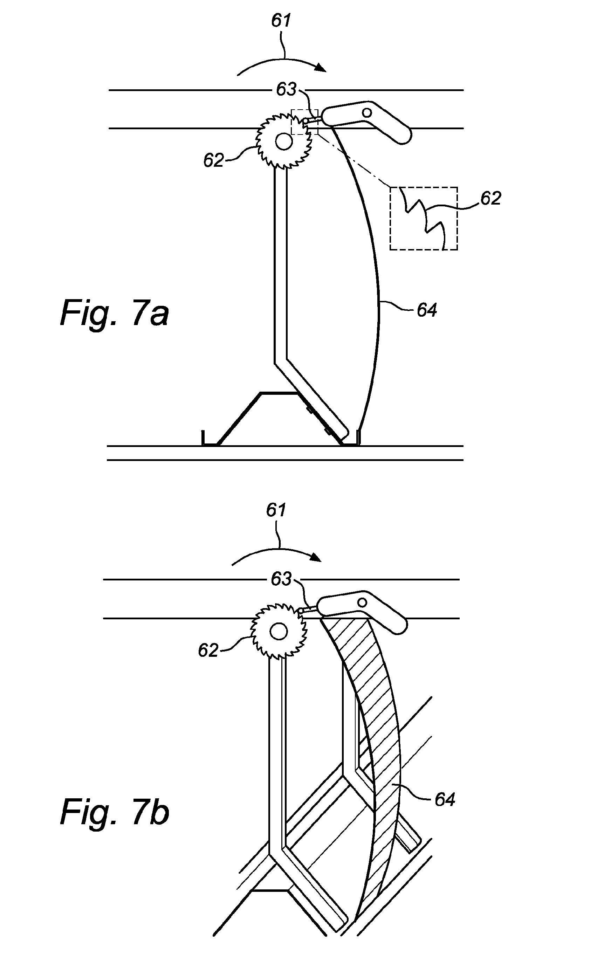

Figures 7a, 7b show an embodiment wherein the urging means are configured to provide a counterpressure or friction which is dependent on the pivoting direction 61 and is realized in that the urging means comprise a probe 63 arranged along an asymmetrical toothing 62. The probe is subjected to a greater friction in the downward direction of the solar panel than in the upward direction. Probe 63 likewise comprises a spring and can optionally also be provided with a damper. In the shown embodiment, this embodiment also comprises a sail 64 for generating a wind-dependent force.

It will be apparent that the invention is not limited to the exemplary embodiments shown and described here, but that within the scope of the appended claims numerous variants are possible which will be self-evident to the skilled person in this field.

## Claims

**1.** Assembly of a support structure and at least one solar panel coupled to the support structure, wherein the support structure comprises at least one base structure for placing on a substantially flat surface, in particular a roof, and at least one top structure extending upward relative to the base structure and connected to the base structure, wherein the at least one solar panel is connected in freely pivotable manner at a first location to the top structure such that at a lower, second location lying at a distance from the first location the solar panel is configured to support loosely on the support structure and/or the substantially flat surface, **characterized in that** at least one hinge via which the solar panel is connected to the top structure is provided with urging means for providing a counterpressure during pivoting of the solar panel in the direction of the support structure, whereby the descent speed of the solar panel is reduced.

**2.** Assembly as claimed in claim 1, wherein the urging means comprise a mechanical spring.

**3.** Assembly as claimed in claim 1 or 2, wherein the urging means comprise a damping element such as a gas or oil damper.

**4.** Assembly as claimed in any of the foregoing claims, wherein the urging means are configured to exert a force dependent on wind force.

**5.** Assembly as claimed in claim 4, wherein the urging means comprise a sail.

**6.** Assembly as claimed in claim 5, wherein the sail is provided with at least one perforation, and particularly with a pattern of perforations extending over the sail.

**7.** Assembly as claimed in any of the foregoing claims, wherein the urging means are configured to provide a counterpressure or friction depending on the pivoting direction.

**8.** Assembly as claimed in claim 7, wherein the urging means comprise a probe arranged along an asymmetrical toothing.

**9.** Assembly as claimed in any of the foregoing claims, wherein the assembly comprises a plurality of solar panels pivotally connected to the support structure.

**10.** Method for arranging at least one solar panel on a substantially flat surface such as a flat roof, particularly by making use of an assembly as claimed in any of the claims 1-10, comprising of:
A) mounting a first location of the at least one solar panel on a support structure such that the at least one solar panel is connected in freely pivotable manner to the support structure, and
B) arranging the support structure on the substantially flat surface, wherein a second location of the at least one solar panel supports loosely on the support structure and/or the substantially flat surface, **characterized by**
C) providing a counterpressure during pivoting of (the second location of) the solar panel in the direction of the support structure, whereby the descent speed of the solar panel is reduced.

**12.** Method as claimed in claim 11, wherein step B) is performed prior to step A).

**13.** Method as claimed in claim 11 or 12, wherein at rest the solar panel is oriented substantially diagonally, and wherein the support structure is positioned during step B) such that a front side of the solar panel is oriented in the direction of the sun.

**14.** Method as claimed in claim 11, 12 or 13, comprising of exerting a counterpressure dependent on wind force.

**15.** Method as claimed in claim 11, 12, 13 or 14, comprising of exerting a counterpressure or friction depending on the pivoting direction.
